# EUROPÄISCHE PATENTSCHRIFT

(11) **EP 4 359 689 B1**
(45) Veröffentlichungstag und Bekanntmachung des Hinweises auf die Patenterteilung: **04.11.2026**
(21) Anmeldenummer: 22734971.9
(22) Anmeldetag: 23.06.2022
(51) Int. Cl.: F16K 1/36, F16K 31/06

(54) **VENTIL ZUR REGELUNG UND/ODER STEUERUNG VON MASSENSTRÖMEN**
VALVE FOR REGULATING AND/OR CONTROLLING MASS FLOWS
SOUPAPE POUR RÉGULER ET/OU COMMANDER DES FLUX MASSIQUES

(30) Priorität: 25.06.2021 DE 102021116464
(43) Veröffentlichungstag der Anmeldung: 01.05.2024
(73) Patentinhaber: Solero Technologies Villingen GmbH, 78048 Villingen-Schwenningen (DE)
(72) Erfinder: HEINGL, Ralf, 78054 Villingen-Schwenningen (DE); OHNMACHT, Martin, 78737 Fluorn-Winzeln (DE); DISCH, Stefan, 78136 Schonach (DE); STIMMLER, Reiner, 71229 Leonberg-Warmbronn (DE)
(74) Vertreter: Westphal, Mussgnug & Partner Patentanwälte mbB
(86) Internationale Anmeldenummer: PCT/EP2022/067211
(87) Internationale Veröffentlichungsnummer: WO 2022/268972

(56) Entgegenhaltungen:
- WO-A1-2012/008202
- CN-B- 107 166 048
- JP-A- 2007 218 280
- US-A- 5 209 455
- US-A1- 2019 085 999

## Beschreibung

Die Erfindung betrifft ein Ventil zur Regelung und/oder Steuerung von Massenströmen mit den Merkmalen des Oberbegriffs des Patentanspruchs 1. Bei einem solchen Ventil ist eine Durchlassöffnung vorhanden, die von einem Ventilsitz umgeben ist. Ferner ist ein elastisches Dichtelement vorhanden, das durch ein Schließelement zwischen einer Schließposition, in der es den Ventilsitz verschließt und mindestens einer geöffneten Position, in der es den Ventilsitz freigibt, bewegt werden kann.

Ein kritischer Punkt bei derartigen Ventilen ist ihre Dichtigkeit in der Schließposition. Diese wird im Stand der Technik in der Regel dadurch herbeigeführt, dass das elastische Dichtelement stirnseitig am Schließelement anliegend mit diesem verklebt oder an dieses vulkanisiert ist und durch das Schließelement in der Schließposition gegen den Ventilsitz gepresst wird, wie es beispielsweise der DE 10 2012 204 565 A1 zu entnehmen ist.

Die Praxis zeigt aber, dass der Erfolg dieses Ansatzes kritisch davon abhängt, dass der Ventilsitz mit hinreichender Genauigkeit senkrecht zur Achse der Bewegung des Schließelements ausgerichtet ist. Kommt es hier zu einer Verkippung, wird das Dichtelement nicht mehr gleichmäßig an den Ventilsitz gepresst, was zu Leckageströmen führt. Die beschriebene Vorgehensweise stellt daher hohe Anforderungen an das Fertigungsverfahren, die mit Methoden kostengünstiger Massenfertigung oft nicht oder nur unter Inkaufnahme erheblicher Ausschussquoten zu realisieren sind.

Als Stand der Technik werden die Druckschriften CN 107 166 048 B, US 5,209,455 A, WO 2012/008202 A1,JP 2007 218280 A und US 2019/085999 A1 genannt. Insbesondere offenbart JP 2007 218280 A ein Ventil gemäß dem Oberbegriff des Anspruchs 1.

Die Aufgabe der Erfindung besteht daher darin, ein Magnetventil zur Regelung und/oder Steuerung von Massenströmen bereitzustellen, das eine verbesserte Toleranz gegenüber Verkippungen des Ventilsitzes relativ zur Achse der Bewegung des Schließelements aufweist. Diese Aufgabe wird gelöst durch ein Magnetventil mit den Merkmalen des Patentanspruchs 1. Vorteilhafte Weiterbildungen der Erfindung sind Gegenstand der abhängigen Ansprüche.

Das erfindungsgemäße Ventil hat ein bewegliches Schließelement, einen Düsenkörper mit einer Durchlassöffnung und mit einem die Durchlassöffnung umgebenden Ventilsitz, und ein elastisches Dichtelement, das mit dem beweglichen Schließelement bewegbar ist, um den Ventilsitz zu verschließen oder zu öffnen.

Erfindungswesentlich ist, dass zumindest bei geöffnetem Ventilsitz ein Spalt zwischen Abschnitten des elastischen Dichtelements und diesen gegenüber liegenden Abschnitten des beweglichen Schließelements vorhanden ist. Der Spalt muss nicht zwingend ein konstantes Spaltmaß haben, sondern der Abstand zwischen den entsprechenden Abschnitten des beweglichen Schließelements und des elastischen Dichtelements kann variieren; wesentlich ist, dass eine Freistellung oder ein Leervolumen zwischen diesen Abschnitten vorhanden ist. Erfindungsgemäß ist der Spalt zwischen Abschnitten des elastischen Dichtelements und diesen gegenüber liegenden Abschnitten des beweglichen Schließelements vorhanden, die sich vom Rand des elastischen Dichtelements ausgehend in Richtung auf dessen Zentrum erstrecken.

Diese Maßnahme erlaubt dem elastischen Dichtelement eine Verformung, die zu einer effektiven Kompensation der bislang auftretenden negativen Auswirkungen einer Verkippung des Ventilsitzes relativ zur Bewegungsrichtung des beweglichen Schließelements führt. Dieser Effekt kann durch die Wahl der Materialparameter, insbesondere der Härte des elastischen Schließemelents, das beispielsweise aus einem FKM-Gummi bestehen kann, und der Breite des Spalts optimiert werden.

Besonders bevorzugt ist es, wenn der Ventilsitz durch einen Vorsprung gebildet wird und dass das elastische Dichtelement den Vorsprung überdeckt, um den Ventilsitz zu verschließen. Bei entsprechend gewähltem Anpressdruck wird dabei der den Ventilsitz bildende Vorsprung in das elastische Material, aus dem das elastische Dichtelement besteht, hineingepresst und quasi in dieses Material eingebettet, so dass die gesamte Oberfläche des Vorsprungs in innigem Kontakt zum elastischen Dichtelement steht. Dadurch wird die Dichtwirkung im Vergleich zu Konfigurationen, bei denen ein elastisches Dichtelement lediglich mit einer Wandfläche, z.B. der Innenwand, eines Ventilsitzes wechselwirkt, deutlich verbessert.

Das elastische Dichtelement kann insbesondere an einer dem Ventilsitz zugewandten Stirnseite des beweglichen Schließelements angeordnet sein, was zu einem einfachen Aufbau führt.

Um die Möglichkeit zum Ausgleich von Verkippungen durch das elastische Dichtelement weiter zu optimieren, hat es sich dabei als besonders vorteilhaft erwiesen, wenn dass das elastische Dichtelement mit einem Stift am beweglichen Schließelement angeordnet ist. Insbesondere kann das elastische Dichtelement dann ringförmig gestaltet sein und mit einem die Ringmitte durchsetzenden Stift an der Stirnseite des beweglichen Schließelements befestigt werden, was zu einer spürbaren Verbesserung im Vergleich zu flächigen stoffschlüssigen Verbindungen führt.

Andererseits kann es fertigungstechnisch sehr effizient sein, wenn man das elastische Dichtelement direkt auf das bewegliche Schließelement aufvulkanisiert.

Der Spalt ist zumindest teilweise durch eine Stufe oder Ausnehmung an der dem beweglichen Schließelement zugewandten Seite des elastischen Dichtelements gebildet werden, also eine lokale Schwächung des elastischen Dichtelements, was beispielsweise seine Anpassung durch Verbiegung erleichtert.

Zusätzlich kann der Spalt zumindest teilweise durch eine Stufe oder Ausnehmung an der dem elastischen Dichtelement zugewandten Seite des beweglichen Schließelements gebildet sein.

Besonders bevorzugt ist eine Anordnung, bei der bei geöffnetem Ventilsitz, zumindest Abschnitte der dem Schließelement zugewandten Oberfläche des elastischen Dichtelements, die den Abschnitten der dem Ventilsitz zugewandten Oberfläche des elastischen Dichtelements, die bei geschlossenem Ventilsitz mit diesem in Kontakt stehen, gegenüber liegen, von der dem elastischen Dichtelement zugewandten Oberfläche der Stirnseite des Schließelements beabstandet sind. Diese Anordnung erleichtert die Anpassung der Form des elastischen Dichtelements beim Schließen eines verkippten Ventilsitzes in besonders effektiver Weise. In einer solchen Konfiguration kann der Spalt auch durch eine ringförmig umlaufende Nut gebildet werden.

Eine Kategorie von Ventilen, für die die Erfindung besonders gut geeignet ist, sind Magnetventile mit Magnetspule, Polkern und Anker. In diesem Fall kann das Schließelement direkt durch den Anker des Magnetventils gebildet werden.

Eine besondere Relevanz der Erfindung für solche Ventile besteht auch deshalb, weil es sich fertigungstechnisch anbietet, sie aus Komponenten zusammenzusetzen, die insbesondere eine mit Kunststoff umspritzte Baugruppe aufweisen, welche zumindest Magnetspule und Polkern enthält, in dieser Baugruppe dann als Schließelement den Anker mit daran angeordnetem elastischen Dichtelement anzuordnen und schließlich die Durchlassöffnung mit dem diese umgebenden Ventilsitz als deckelartig gestaltetes weiteres Bauteil aufzusetzen. Das Problem dieser kostengünstigen und effizienten Fertigungsmethode ist aber, dass eine exakte Ausrichtung von Ventilsitz und Bewegungsrichtung des Schließelements relativ zueinander nur mit hohem Aufwand zu erreichen ist, der durch die mit der Erfindung erreichte Verbesserung der Toleranz gegenüber einer solchen Verkippung obsolet wird.

Das Schließelement ist mit einer Druckfeder abgestützt, wodurch eine besonders gute Abdichtung des Ventilsitzes erreicht werden kann.

Die Erfindung wird nachfolgend anhand von Figuren, die Ausführungsbeispiele darstellen, näher erläutert. Es zeigt:
- Fig. 1a:: Eine Schnittdarstellung eines als Magnetventil ausgebildeten ersten nicht erfindungsgemäßen - Ausführungsbeispiels,
- Fig. 1b:: eine Ausschnittsvergrößerung aus Figur 1a,
- Fig. 2a:: eine Schnittdarstellung eines als Magnetventil ausgebildeten zweiten erfindungsgemäßen Ausführungsbeispiels, und
- Fig. 2b:: eine Ausschnittsvergrößerung aus Figur 2a.

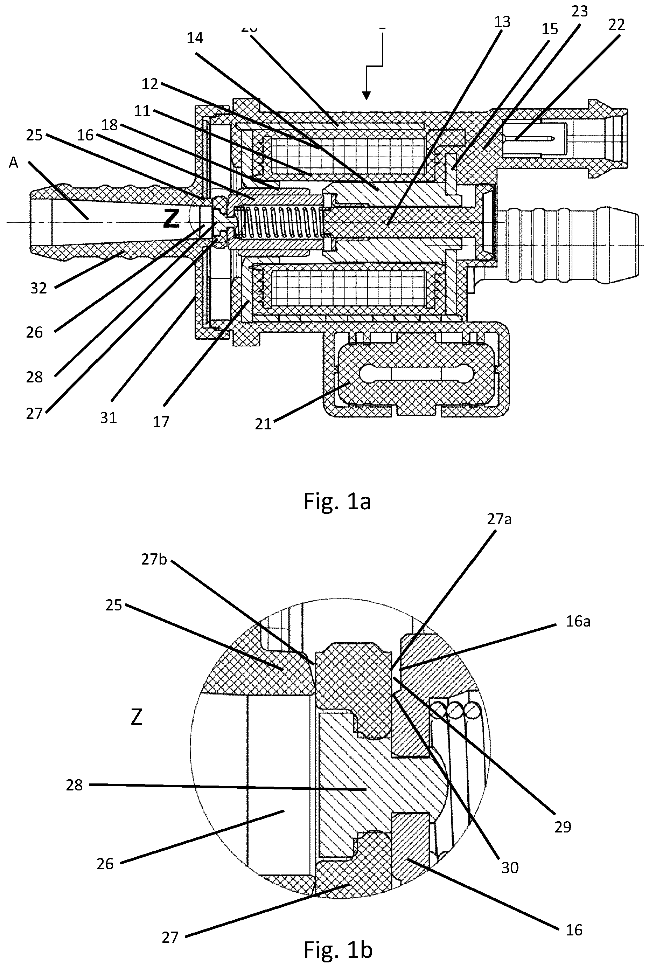

Das in Figur 1a gezeigte Ventil 1 ist ein Magnetventil. Die Magnetspule wird durch eine auf einen im Wesentlichen hohlzylinderförmigen Wicklungsträger 11 gewickelte Wicklung 12 gebildet. In den Innenraum des im Wesentlichen hohlzylinderförmigen Wicklungsträgers 11 hinein ragt eine Führung 13, auf der ein Polkern 14 angeordnet ist, der sich an einem Deckel 15 abstützt.

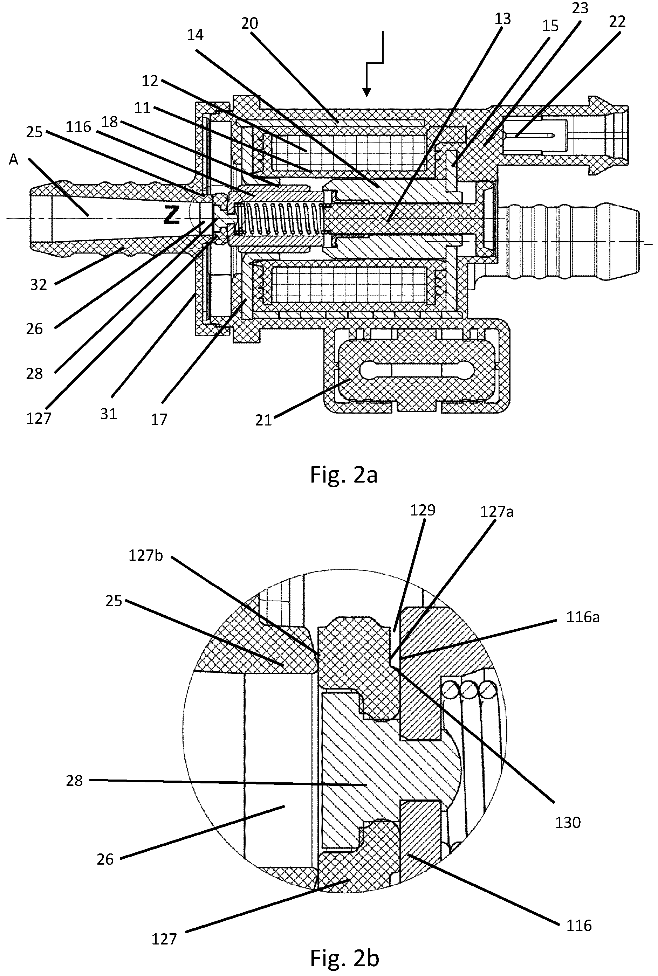

Ein durch den Anker des Magnetventils gebildetes bewegliches Schließelement 16, das in dem Ausführungsbeispiel gemäß Figur 2a mit 116 bezeichnet ist, ist in einer durch einen Flansch 17 zentrierten Buchse 18 entlang der Achse A verschiebbar gelagert. Das durch den Anker gebildete Schließelement 16 ist über eine Druckfeder 19 an der Führung 13 abgestützt.

Deckel 15, Flansch 17 und ein rohrförmiges Gehäuse 20, welches die Magnetspule in radialer Richtung umgibt, sind zusammen mit einer Kupplung 21 zur mechanischen Befestigung und einem Kontaktabschnitt 22 zur Herstellung eines elektrischen Anschlusses zur Bestromung der Magnetspule durch eine Umspritzung 23 aus Kunststoff zu einer ersten Baugruppe zusammengefasst. Die Druckfeder 19 und das durch sie abgestützte, durch den Anker gebildete Schließelement 16 können bei der Herstellung des Ventils 1 nach der Herstellung der ersten Baugruppe durch Umspritzen in die Buchse 18 eingeführt werden.

Eine zweite Baugruppe, welche den Düsenkörper 32 bildet, weist insbesondere eine Zuleitung 24, eine von einem als ringförmigem Vorsprung ausgebildeten Ventilsitz 25 umgebene Durchlassöffnung 26 und einen Deckelabschnitt 31, welcher die Stirnseite der ersten Baugruppe, an der sich das Schließelement 16 befindet, übergreift. Sie kann ebenfalls aus Kunststoff gefertigt, beispielsweise gespritzt, werden und wird an der zweiten Baugruppe befestigt, beispielsweise verklebt und/oder ver-rastet.

Dabei wird in der gezeigten Ausführungsform ein stirnseitig an der dem Ventilsitz 25 zugewandten Seite des durch den Anker gebildeten Schließements 16 befestigtes elastisches Dichtelement 27, das so zur Anlage an den Ventilsitz 25 gebracht, dass es den Ventilsitz 25 überdeckt und insbesondere mit den Abschnitten 27b mit dem Ventilsitz 25 in Kontakt stehen. Außerdem wird bei diesem Vorgang die Druckfeder 19 zusammengedrückt, so dass das elastische Dichtelement 27 bei unbestromter Magnetspule durch die Federkraft an den Ventilsitz 25 angepresst wird und diesen verschließt. In der Ausführungsform gemäß Figur 2a ist dieses elastische Dichtelement mit dem Bezugszeichen 127 bezeichnet.

Zum Öffnen des Ventils 1 wird die Magnetspule bestromt, was dazu führt, dass der Anker und damit das durch ihn gebildete bewegliche Schließelement 16

Wie man insbesondere in der vergrößerten Darstellung gemäß Figur 1b erkennen kann, ist im gezeigten Ausführungsbeispiel das stirnseitig am durch den Anker gebildeten beweglichen Schließelement 16 angeordnete, ringförmige elastische Dichtelement 27 mit einem Stift 28 befestigt, wodurch mehr Ausgleichsbewegungen als bei einem verklebten elastischen Dichtelement 27 ermöglicht werden. Grundsätzlich ist es aber in einer nicht gezeigten Ausführungsform auch möglich, das ringförmige elastische Dichtelement direkt auf den Anker bzw. auf das bewegliche Schließelement 16 aufzuvulkanisieren.

Ferner erkennt man, dass ein Spalt 29 zwischen dem Abschnitt 27a des ringförmigen elastischen Dichtelements 27 und dem diesem gegenüber liegenden Abschnitt 16a des durch den Anker gebildeten beweglichen Schließelements 16 vorhanden ist. Der Spalt 29 wird dabei in diesem nicht erfindungsgemäßen Ausführungsbeispiel durch eine Stufe 30 an der Stirnseite des beweglichen Schließelements 16, die durch eine Ausnehmung, die dazu führt, dass Abschnitt 16a des beweglichen Schließelements 16 zurückspringt, erzeugt. Die einzigen Unterschiede zwischen dem Ausführungsbeispiel gemäß Figur 2a und dem Ausführungsbeispiel gemäß Figur 1a liegen in der Formgebung des elastischen Dichtelements 127, der Stirnseite des durch den Anker gebildeten Schließelements 116 und des letztlich durch die Stufe 130 erzeugten Spalts 129, was man in Figur 2b besonders gut erkennen kann. Deswegen sind lediglich diese Bauteile mit anderen Bezugszeichen als in Figuren 1a und 1b versehen, während die anderen Bauteile des Ventils 2 gemäß Figur 2a bzw. 2b mit denselben Bezugszeichen gekennzeichnet sind wie in den Figuren 1a und 1b. Für die Beschreibung des grundsätzlichen Aufbaus des Ventils 2 im Hinblick kann im Hinblick auf die gleich gekennzeichneten Bauteile unmittelbar auf die Beschreibung des Ventils 1 zu den Figuren 1a und 1b verwiesen werden, in der teilweise auch bereits Hinweise zur Benennung der korrespondierenden Bauteile in der Ausführungsform gemäß Figur 2a gegeben sind.

Wie man der Figur 2b entnimmt, ist auch bei dem Ventil 2 das stirnseitig am durch den Anker gebildeten beweglichen Schließelement 116 angeordnete, ringförmige elastische Dichtelement 127 mit einem Stift 28 befestigt, wodurch mehr Ausgleichsbewegungen als bei einem verklebten elastischen Dichtelement 127 ermöglicht werden. Ferner erkennt man, dass auch ein Spalt 129 zwischen dem Abschnitt 127a des ringförmigen elastischen Dichtelements 127 und dem diesem gegenüber liegenden Abschnitt 116a des durch den Anker gebildeten beweglichen Schließelements 16 vorhanden ist. Der Spalt 129 wird aber in diesem erfindungsgemäßen Ausführungsbeispiel durch eine Stufe 130 an der dem beweglichen Schließelements 116 zugewandten Seite des elastischen Dichtelements 127, die durch eine Ausnehmung, die dazu führt, dass Abschnitt 127a des elastischen Dichtelements 127 zurückspringt, erzeugt.

### Bezugszeichenliste

- 1,2: Ventil
- 11: Wicklungsträger
- 12: Wicklung
- 13: Führung
- 14: Polkern
- 15: Deckel
- 16,116: bewegliches Schließelement
- 16a,116a: Abschnitt
- 17: Flansch
- 18: Buchse
- 19: Druckfeder
- 20: Gehäuse
- 21: Kupplung
- 22: Kontaktabschnitt
- 23: Umspritzung
- 24: Zuleitung
- 25: Ventilsitz
- 26: Durchlassöffnung
- 27,127: elastisches Dichtelement
- 27a,27b,127a,127b: Abschnitt
- 28: Stift
- 29,129: Spalt
- 30,130: Stufe
- 31: Deckelabschnitt
- 32: Düsenkörper
- A: Achse

## Patentansprüche

1. Ventil (2) mit
- einem beweglichen Schließelement (116)
- einem Düsenkörper (32) mit einer Durchlassöffnung (26) sowie einem die Durchlassöffnung (26) umgebenden Ventilsitz (25), und
- einem elastischen Dichtelement (127), das mit dem beweglichen Schließelement (116) bewegbar ist, um den Ventilsitz (25) zu verschließen oder zu öffnen, wobei
- zumindest bei geöffnetem Ventilsitz (25) ein Spalt (129) zwischen mindestens einem Abschnitt (127a) des elastischen Dichtelements (127) und einem diesem gegenüber liegenden Abschnitt (116a) des beweglichen Schließelements (116) vorhanden ist,
- wobei der Spalt zwischen Abschnitten des elastischen Dichtelements ( 127) und diesen gegenüber liegenden Abschnitten des beweglichen Schließelements (116) vorhanden ist, die sich vom Rand des elastischen Dichtelements ( 127) ausgehend in Richtung auf dessen Zentrum erstrecken,
- und das bewegliche Schließelement (116) mit einer Druckfeder (19) abgestützt ist, so dass es im geschlossenen Zustand des Ventils (2) das elastische Dichtelement ( 127) an den Ventilsitz (25) anpresst,
**dadurch gekennzeichnet, dass**
der Spalt (129) zumindest teilweise durch eine Stufe (130) oder Ausnehmung an der dem beweglichen Schließelement (116) zugewandten Seite des elastischen Dichtelements (127) gebildet ist.

2. Ventil (2) nach Anspruch,
**dadurch gekennzeichnet, dass** der Ventilsitz (25) durch einen Vorsprung gebildet wird und dass das elastische Dichtelement ( 127) den Vorsprung überdeckt, um den Ventilsitz (25) zu verschließen.

3. Ventil (2) nach einem der Ansprüche 1 oder 2,
**dadurch gekennzeichnet, dass** das elastische Dichtelement (127) an einer dem Ventilsitz (25) zugewandten Stirnseite des beweglichen Schließelements (116) angeordnet ist.

4. Ventil (2) nach Anspruch 3,
**dadurch gekennzeichnet, dass** das elastische Dichtelement (127) mit einem Stift (28) am beweglichen Schließelement (116) angeordnet ist.

5. Ventil (2) nach Anspruch 3,
**dadurch gekennzeichnet, dass** das elastische Dichtelement direkt auf dem beweglichen Schließelement (116) aufvulkanisiert ist.

6. Ventil (2) nach einem der Ansprüche 1 bis 5,
**dadurch gekennzeichnet, dass** bei geöffnetem Ventilsitz (25) , zumindest Abschnitte (127a) einer dem Schließelement (116) zugewandten Oberfläche des elastischen Dichtelements(127), die Abschnitten (127b) einer dem Ventilsitz (25) zugewandten Oberfläche des elastischen Dichtelements (127), die bei geschlossenem Ventilsitz (25) mit diesem in Kontakt stehen, gegenüber liegen, von einer dem elastischen Dichtelement (127) zugewandten Oberfläche einer/der Stirnseite des Schließelements (116) beabstandet sind.

7. Ventil (2) nach einem der Ansprüche 1 bis 6,
**dadurch gekennzeichnet, dass** das Ventil ein Magnetventil mit Magnetspule, Polkern (14) und Anker ist.

8. Ventil (2) nach Anspruch 7,
**dadurch gekennzeichnet, dass** das bewegliche Schließelement (116) durch den Anker des Magnetventils gebildet ist.

## Claims

1. Valve (2) with
- a movable closing element (116),
- a nozzle body (32) with a passage opening (26) as well as a valve seat (25) surrounding the passage opening (26), and
- an elastic sealing element (127), which is movable with the movable closing element (116) in order to close or open the valve seat (25),
wherein
- at least when the valve seat (25) is open, a gap (129) is present between at least one portion (127a) of the elastic sealing element (127) and a portion (116a) of the movable closing element (116) lying opposite that portion,
- wherein the gap is present between portions of the elastic sealing element (127) and portions of the movable closing element (116) lying opposite those portions, which extend from the edge of the elastic sealing element (127) towards its center,
- and the movable closing element (116) is supported by a compression spring (19), so that, in the closed state of the valve (2), it presses the elastic sealing element (127) against the valve seat (25),
**characterized in that**
the gap (129) is formed at least partially by a step (130) or recess on the side of the elastic sealing element (127) facing the movable closing element (116).

2. Valve (2) according to claim 1,
**characterized in that** the valve seat (25) is formed by a projection and that the elastic sealing element (127) covers the projection in order to close the valve seat (25).

3. Valve (2) according to one of claims 1 or 2,
**characterized in that** the elastic sealing element (127) is arranged on an end face of the movable closing element (116) facing the valve seat (25).

4. Valve (2) according to claim 3,
**characterized in that** the elastic sealing element (127) is arranged on the movable closing element (116) by means of a pin (28).

5. Valve (2) according to claim 3,
**characterized in that** the elastic sealing element is vulcanized directly onto the movable closing element (116).

6. Valve (2) according to one of claims 1 to 5,
**characterized in that**, when the valve seat (25) is open, at least portions (127a) of a surface of the elastic sealing element (127) facing the closing element (116), which lie opposite portions (127b) of a surface of the elastic sealing element (127) facing the valve seat (25), which portions are in contact with the latter when the valve seat (25) is closed, are spaced apart from a surface, facing the elastic sealing element (127), of an/the end face of the closing element (116).

7. Valve (2) according to one of claims 1 to 6,
**characterized in that** the valve is a solenoid valve with a solenoid coil, a pole core (14) and an armature.

8. Valve (2) according to claim 7,
**characterized in that** the movable closing element (116) is formed by the armature of the solenoid valve.

## Revendications

1. Soupape (2) comprenant
- un élément (116) mobile de fermeture,
- un corps (32) de buse ayant une ouverture (26) de passage ainsi qu'un siège (25) de soupape entourant l'ouverture (26) de passage, et
- un élément (127) élastique d'étanchéité, qui est mobile avec l'élément (116) mobile de fermeture pour fermer ou ouvrir le siège (25) de la soupape,
dans laquelle
- au moins lorsque le siège (25) de soupape est ouvert, il y a un intervalle (129) entre au moins une partie (127a) de l'élément (127) élastique d'étanchéité et une partie (116a) se trouvant en face de celui-ci de l'élément (116) mobile de fermeture,
- dans laquelle il y a l'intervalle entre des parties de l'élément (127) élastique d'étanchéité et des parties se trouvant en face de celui-ci de l'élément (116) mobile de fermeture, qui s'étendent en partant du bord de l'élément (127) élastique d'étanchéité en direction de son centre,
- et l'élément (116) mobile de fermeture est appuyé par un ressort (19) de compression de manière à ce que dans l'état fermé de la soupape (2) il presse l'élément (127) élastique d'étanchéité sur le siège (25) de la soupape
**caractérisée en ce que**
l'intervalle (129) est formé au moins en partie par un gradin (130) ou un évidement sur la face, tournée vers l'élément (116) mobile de fermeture, de l'élément (127) élastique d'étanchéité.

2. Soupape (2) suivant la revendication,
**caractérisée en ce que**
le siège (25) de la soupape est formé par une saillie et **en ce que** l'élément (127) élastique d'étanchéité recouvre la saillie afin de fermer le siège (25) de la soupape.

3. Soupape (2) suivant l'une des revendications 1 ou 2,
**caractérisée en ce que**
l'élément (127) élastique d'étanchéité est disposé sur une face frontale, tournée vers le siège (25) de la soupape, de l'élément (116) mobile de fermeture.

4. Soupape (2) suivant la revendication 3,
**caractérisée en ce que**
l'élément (127) élastique d'étanchéité est monté par une broche (28) sur l'élément (116) mobile de fermeture.

5. Soupape (2) suivant la revendication 3,
**caractérisée en ce que**
l'élément élastique d'étanchéité est vulcanisé directement sur l'élément (116) mobile de fermeture.

6. Soupape (2) suivant l'une des revendications 1 à 5,
**caractérisée en ce que**
lorsque le siège (25) de la soupape est ouvert, au moins des parties (127a) d'une surface, tournée vers l'élément (116) de fermeture, de l'élément (127) élastique d'étanchéité, sont en face des parties (127b) d'une surface, tournée vers le siège (25) de la soupape, de l'élément (127) élastique d'étanchéité qui, lorsque le siège (25) de la soupape est fermé, sont en contact avec celui-ci, sont à distance d'une surface, tournée vers l'élément (127) élastique d'étanchéité, d'une/de la face frontale de l'élément (116) de fermeture.

7. Soupape (2) suivant l'une des revendications 1 à 6,
**caractérisée en ce que**
la soupape est une électrovanne ayant une bobine magnétique, un noyau (14) polaire et une armature.

8. Soupape (2) suivant la revendication 7,
**caractérisée en ce que**
l'élément (116) mobile de fermeture est formé par l'armature de l'électrovanne.
